# EUROPÄISCHE PATENTANMELDUNG

(11) **EP 3 543 411 A1**
(43) Veröffentlichungstag der Anmeldung: **25.09.2019**
(21) Anmeldenummer: 18163291.0
(22) Anmeldetag: 22.03.2018
(51) Int. Cl.: E03C 1/084, F16J 15/06, C08K 5/092, F16L 58/10

(54) **FORMTEIL AUS ELASTOMER**

(71) Anmelder: Carl Freudenberg KG, 69469 Weinheim (DE)
(72) Erfinder: KLEMT, Michael, 74629 Pfedelbach (DE); HARWAR, Mario, 74182 Obersulm-Willsbach (DE); KRAMER, Berthold, 74523 Schwäbisch Hall (DE)

(57) **Zusammenfassung**

Die Erfindung betrifft ein Formteil (1) aus Elastomer (2), mit einem Teilelement (2) aus Elastomer oder mit einer Elastomerbeschichtung (3) zum Abweisen von Feststoffablagerung (5) auf dem Formteil (1) für flüssigkeitskontaktierende Vorrichtungen. Erfindungsgemäß ist das Elastomer (2, 3) als flüssigkeitsquellendes Elastomer ausgeführt. Insbesondere weist das Elastomer (2, 3) eine hohe Quelldynamik auf, d.h. das Volumen (V1, V2) des Elastomers (2, 3) oszilliert bei Kontakt bzw. Wegnahme von Flüssigkeit (4) recht schnell.

In vorteilhafter Weise wird so ein Formteil (1) für flüssigkeitskontaktierende Vorrichtungen aus Elastomer (2, 3) geschaffen, welches dauerhafte Feststoffablagerungen (5) auf der Oberfläche des Elastomers (2, 3) wirksam, einfach und sauber verhindert.

## Beschreibung

Die Erfindung betrifft ein Formteil für flüssigkeitskontaktierende Vorrichtungen aus Elastomer mit den Merkmalen von Anspruch 1.

### Stand der Technik

Im Sanitärbereich und bei Haushaltsgeräten ist es bekannt einzelne Elemente in wasserkontaktierenden und wasserführenden Bereichen aus Elastomer herzustellen, z.B. Dichtungen und Düsen.

Im Laufe der Zeit kommt es dabei zu Ablagerungen von Feststoffen an der Oberfläche, teilweise von Kalkablagerungen, welche hart sein können und die Funktionsfähigkeit der Formteile aus Gummi beeinträchtigen und einen Funktionsausfall der Vorrichtungen und Maschinen nach sich ziehen können. Bei Kontakt der Formteile mit heißem Wasser wird das Problem noch verstärkt.

Wenn nachfolgend von Formteilen gesprochen wird, so sind damit fertig ausgeformte Formteile sowie auch noch weiter zu bearbeitende Halbzeuge gemeint.

Im Stand der Technik gibt es daher Bemühungen, die Kalkablagerungen entweder einfach entfernen zu können oder die Ablagerungen insgesamt zu reduzieren. Zur einfacheren Entfernbarkeit werden die Formteile mit einem speziellen Überzug versehen, z.B. aus Polyetrafluoretylen. Um hingegen die Ablagerungen zu verhindern wird z.B. in der DE 28 54 471 C3 ein Strahlformer aus Gummi für sanitäre Armaturen vorgeschlagen. Neben Kautschuk werden dem Gummi noch Anteile an Graphit und Paraffin zugesetzt. Diese bewirken eine Trennwirkung an der Oberfläche des Formteils.

Soll das Formteil in Trinkwasser kontaktierenden oder transportierenden Vorrichtungen zum Einsatz kommen, so ist zwingend darauf zu achten, dass sich keine Bestandteile aus dem Formteil herauslösen und das Trinkwasser verunreinigen. Soll das Formteil in unterschiedliche wasserhaltige Flüssigkeiten kontaktierenden oder transportierenden Vorrichtungen von Prozessanlagen zum Einsatz kommen, so ist zwingend darauf zu achten, dass auch keine Partikel in oder durch das Formteil verschleppt werden.

### Aufgabenstellung

Aufgabe der vorliegenden Erfindung ist es, ein Formteil für flüssigkeitskontaktierende Vorrichtungen aus Elastomer zu schaffen, welches Feststoffablagerungen auf dem Elastomer wirksam verhindert. Unter Elastomeren werden hier auch Gummi, Silikon und thermoplastische Elastomere verstanden.

### Technische Lösung

Gelöst wird diese Aufgabe durch ein Formteil für flüssigkeitskontaktierende Vorrichtungen aus Elastomer mit den Merkmalen von Anspruch 1.

Das erfindungsgemäße Formteil ist aus Elastomer, mit einem Teilelement aus Elastomer oder mit einer Elastomerbeschichtung zum Abweisen von Kalkablagerungen auf der Oberfläche des Formteils. Das Formteil kommt zum Einsatz in flüssigkeitskontaktierenden, insbesondere in wasserkontaktierenden und auch wassertransportierenden Vorrichtungen. Beim Formteil aus Elastomermaterial gemäß der ersten Variante ist das ganze Formteil aus dem einen Elastomermaterial, ist gemäß einer zweiten Variante nur ein Teilelement des Formteils aus dem besagten Elastomer, so ist zumindest ein weiteres Teilelement aus einem weiteren Material, und bei der dritten Variante kann die Elastomerbeschichtung beispielsweise durch Auftragen eines elastomerhaltigen Lackes hergestellt werden.
Erfindungsgemäß ist das Elastomer, also das Formteil aus Elastomer, das Teilelement aus Elastomer oder die Elastomerbeschichtung, als flüssigkeitsquellendes Elastomer ausgeführt. D. h. bei Kontakt des Elastomers mit Flüssigkeit, z.B. Wasser quillt das Elastomer in kurzer Zeit stark an und dehnt sich aus, erreicht also ein größeres Volumen. Bei Wegnahme des Wassers bzw. bei Rücktrocknung, d. h. wenn das Elastomer nicht mehr in Kontakt mit der Flüssigkeit steht, erfolgt eine weitestgehend vollständige Rückstellung des Volumens. Durch das Oszillieren des Volumens, d. h. die abwechselnde positive und negative Volumenexpansion, erfolgt eine rein mechanische Reinigung der Oberfläche des Elastomers und abgelagerte Verunreinigungen, wie insbesondere Kalk, blättern ab. Durch die Wahl des Elastomers als flüssigkeitsquellendes Elastomer wird so in vorteilhafter Weise einfach und sauber die Bildung von Feststoffablagerungen, z.B. Kalkablagerung auf dem Formteil verhindert.

In vorteilhafter Weiterbildung des erfindungsgemäßen Formteils besitzt das Elastomer zur Medienaufnahme geeignete mikroskopische oder makroskopische Strukturen, welche Flüssigkeit aufnehmen können, also aufquellen und so eine Volumenzunahme erfahren. Insbesondere können Mikrohohlräume oder eingelagerte Additive vorgesehen sein.

Es wurde herausgefunden, dass es vorteilhaft ist, wenn das Elastomer ein Basismaterial, zum Beispiel Silikon und ein Additiv mit medienaffiner, insbesondere hygroskopischer Wirkung, zum Beispiel Zitronensäure, aufweist.

In einer besonders vorteilhaften und daher bevorzugten Weiterbildung des erfindungsgemäßen Formteils liegt der aktive Zustand des Additivs im Bereich der Verarbeitungstemperatur des Basismaterials, bei welcher das Basismaterial durch vernetzten o.ä. in einen für Gebrauch oder Weiterverarbeitung sinnvolle Form überführt wird. Damit ist eine einfache Fertigung des Formteils möglich. Das Additiv und das Basismaterial können trocken oder nass gemischt werden. Beim Erhitzen des Materials für die Formgebung verbinden sich Basismaterial und Additiv dann.

Es wurde als vorteilhaft erkannt, das Elastomer als Vollmaterial auszuführen, d.h. nicht aufzuschäumen. Dadurch werden höhere Stabilitätswerte und eine bessere Haltbarkeit des Formteils erreicht.

In vorteilhafter Weiterbildung weist das Elastomer eine hohe Quelldynamik auf und insbesondere wird die maximale Quellung des Elastomers bereits nach weniger als 12 Stunden, besonders bevorzugt nach weniger als 6 Stunden erreicht. Je nach Einsatzzweck des erfindungsgemäßen Formteils kann eine starke Quellung auch bereits nach wenigen Minuten erreicht werden. Bevorzugt wird, wenn die Volumenzunahme des Elastomers durch das Quellen im Bereich von 5 % bis 20 % des quellbaren Volumenanteils des Elastomers liegt. Es wurde festgestellt, dass die Rückstellung des Volumens bei Rücktrocknung durch Beaufschlagung mit einem warmen Luftstrom , Unterdruck oder Erwärmung unter freier Konvektion reduziert werden kann. Überraschend wurde festgestellt, dass insbesondere so auch die Dauer der Rückstellung auf unter 10 Minuten gedrückt werden kann.

Das Formteil kann im Spritzguss-, Extrusions- oder Kalandrierverfahren oder im additiven Verfahren hergestellt werden. Das gilt sowohl für das Formteil, welches einteilig aus einem Elastomer hergestellt wird; dies gilt aber auch für ein Formteil, welches ein Teilelement aus dem wasserquellenden Elastomer besitzt, wobei hier die 2K-Technologie (Zweikomponententechnologie)zum Einsatz kommen kann. Auch der Einsatz einer Merkomponententechnologie mit mehr als zwei Komponenten ist möglich. Alternativ kann das Formteil aus einem beliebigen Polymer in einem der o.g. Verfahren hergestellt und anschließend ein elastomerhaltiger, flüssigkeitsquellender Lack aufgetragen werden.

Als vorteilhaft wird es angesehen, wenn sich aus dem Formteil bei Kontakt mit Wasser keine Bestandteile herauslösen. Damit ist eine Eignung des Formteils für Trinkwasser transportierende und kontaktierende Vorrichtungen gegeben und die Anwendung des Formteils in derartigen Vorrichtungen ist gesundheitlich unbedenklich.

Das Elastomer kann eine hohe Dehnbarkeit von über 400 % und/oder eine hohe Temperaturbeständigkeit von über 120 Grad Celsius, insbesondere von 140 Grad Celsius bis 160 Grad Celsius. Durch diese Eigenschaften wird eine lange Lebensdauer und ein breites Anwendungsspektrum des Formteils ermöglicht.

Die Erfindung betrifft auch die Verwendung eines Formteils wie obenstehend beschrieben zum Abweisen von Feststoffablagerungen, z.B. Kalkablagerungen auf der Oberfläche des Formteils in Flüssigkeit, z.B. Wasser kontaktierenden und auch transportierenden Vorrichtungen. Die Formteile können dabei als Dichtungen, Strahlbildner, Düsen, Schwimmkörper, Manschetten, Membrane oder ähnliches ausgebildet sein. Im Bereich von Haushaltsgeräten können die Formteile zum Einsatz kommen, z. B. bei Wasserkochern, Kaffeemaschinen, Waschmaschinen, Spülmaschinen oder Bügeleisen. Auch sind industrielle Anwendungsmöglichkeiten denkbar, wie beispielsweise die Auskleidung von Rohrleitungen, in Düsen, Ventilen oder Pumpen, zur Frischwasseraufbereitung, in Boilern oder in Entsalzungsanlagen.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll an Hand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.
Es zeigen in schematischer Darstellung
- Fig. 1a: ein Formteil aus Elastomer
- Fig. 1b: Ein Formteil mit einer Elastomerbeschichtung
- Fig. 1c: ein Formteil mit einem Teilelement aus Elastomer
- Fig. 2a: ein erfindungsgemäßes Formteil, welches in Kontakt mit Wasser steht
- Fig. 2b: das Formteil aus Fig. 2a zu einem späteren Zeitpunkt
- Fig. 2c: das Formteil aus Fig. 2b zu einem späteren Zeitpunkt

Die Erfindung betrifft ein Formteil 1 aus Elastomer 2, mit einem Teilelement 2 aus Elastomer oder mit einer Elastomerbeschichtung 3 zum Abweisen von Kalkablagerung 5 auf dem Formteil 1 für flüssigkeitskontaktierende Vorrichtungen. Erfindungsgemäß ist das Elastomer 2, 3 als flüssigkeitsquellendes Elastomer ausgeführt. Insbesondere weist das Elastomer 2, 3 eine hohe Quelldynamik auf, d.h. das Volumen V1, V2 des Elastomers 2, 3 oszilliert bei Kontakt bzw. Wegnahme von Flüssigkeit 4 recht schnell.
In vorteilhafter Weise wird so ein Formteil 1 für flüssigkeitskontaktierende oder flüssigkeitstransportierende Vorrichtungen aus Elastomer 2, 3 geschaffen, welches dauerhafte Feststoffablagerungen 5 auf der Oberfläche des Elastomers 2, 3 wirksam, einfach und sauber verhindert.

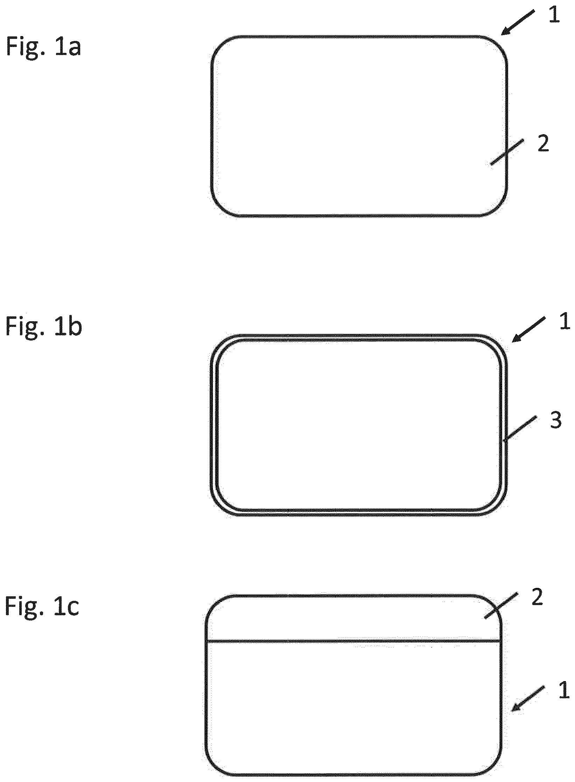

In den Figuren 1a, 1b und 1c sind Formteile 1 unterschiedlicher Ausführung dargestellt. In Figur 1a ist ein Formteil 1 gezeigt, welches aus einem Elastomerkörper 2 besteht. In Figur 1b ist ein Formteil 1 gezeigt, welches an seiner Oberfläche eine Elastomerbeschichtung 3 besitzt. In Figur 1c ist ein Formteil 1 dargestellt, welches ein Teilelement besitzt, welches als Elastomerkörper 2 ausgebildet ist. Das weitere Teilelement kann aus einem anderen Material gefertigt sein. Elastomerkörper 2 als auch Elastomerbeschichtung 3 sind als flüssigkeitsquellendes, z.B. wasserquellendes Elastomer ausgeführt und dienen dem Abweisen von Feststoffablagerungen, z.B. Kalkablagerungen auf dem Formteil 1. Das Formteil 1 kann in flüssigkeitskontaktierenden und flüssigkeitsführenden Vorrichtungen zum Einsatz gelangen, beispielsweise im Sanitärbereich oder in Haushaltsgeräten. Während das Formteil 1 in den Figuren stark schematisiert als Rechteck mit abgerundeten Ecken dargestellt ist, sind unterschiedlichste Formen des Formteils denkbar, z. B. als Dichtungsring oder als Düsenkörper.

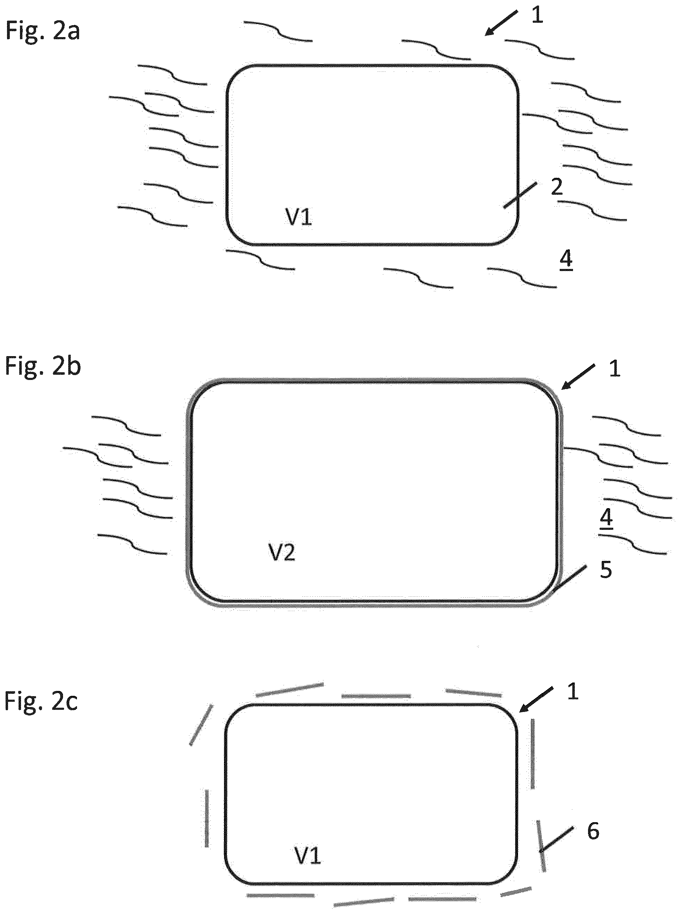

In den Figuren 2a bis 2c ist gezeigt, wie sich ein Formteil 1 im Zeitlauf verändert. Wie in Figur 2a gezeigt, steht ein Formteil 1 aus einem Elastomerkörper 2 in Kontakt mit Flüssigkeit, z.B. Wasser 4. Bevor die Flüssigkeit 4 ein Quellen des Elastomers 2 bewirken kann, hat das Formteil aus Elastomer 1 ein Volumen V1. Durch den andauernden Kontakt des Elastomerkörpers 2 mit der Flüssigkeit 4 bildet sich zum einen eine Feststoffablagerung, z.B. Kalkablagerung 5 auf der Oberfläche des Formteils 1 und der Elastomerkörper 2 erfährt eine deutliche Volumenzunahme durch Quellen des Elastomerkörpers 2 zu einem Volumen V2. Dieser Zustand ist in Figur 2b dargestellt. Wird nun die Flüssigkeit 4 weggenommen und erfolgt eine Rücktrocknung des Elastomerkörpers 2, so wird das Volumen des Elastomerkörpers 2 wieder reduziert und es erfolgt eine nahezu vollständige Rückstellung des Volumens von V2 zurück auf V1. Wie in Figur 2c dargestellt, blättert dabei der Feststoff, z.B. Kalk 6 von der Oberfläche des Formteils 1 ab. Ein Oszillieren des Volumens ergibt sich auch, wenn das Formteil 1 eine Elastomerbeschichtung 3 aufweist oder nur ein Teilelement als Elastomerkörper 2 ausgeführt ist. Im Bereich des flüssigkeitsquellenden Elastomers erfolgt abwechselnd eine Volumenzunahme und eine Volumenreduktion, wobei bei der Volumenreduktion die Feststoffablagerung 5 gelöst wird und der Feststoff 6 abblättert.

### Bezugszeichenliste

- 1: Formteil
- 2: Elastomerkörper
- 3: Elastomerbeschichtung
- 4: Flüssigkeit, z.B. Wasser
- 5: Feststoffablagerung, z.B. Kalkablagerung
- 6: Feststoff, z.B. Kalk

- V1: Volumen ohne Quellung
- V2: Volumen mit Quellung

## Patentansprüche

1. Formteil (1) aus Elastomer (2), mit einem Teilelement (2) aus Elastomer oder mit einer Elastomerbeschichtung (3) zum Abweisen von einer Feststoffablagerung (5) auf dem Formteil (1) für flüssigkeitskontaktierende Vorrichtungen, wobei das Elastomer (2, 3) als flüssigkeitsquellendes Elastomer ausgeführt ist.

2. Formteil nach Anspruch 1, **dadurch gekennzeichnet, dass**
das Elastomer (2, 3) Materialstrukturen besitzt, welche Flüssigkeit (4) aufnehmen können.

3. Formteil nach einem der vorangehenden Ansprüche, **dadurch gekennzeichnet, dass**
das Elastomer (2, 3) ein Basismaterial und ein Additiv mit medienaffiner Wirkung aufweist.

4. Formteil nach Anspruch 3, **dadurch gekennzeichnet, dass**
die Aktivierung des Additivs während der Formgebung des Basismaterials erfolgt.

5. Formteil nach einem der vorangehenden Ansprüche, **dadurch gekennzeichnet, dass**
das Elastomer (2, 3) als Vollmaterial ausgeführt ist.

6. Formteil nach einem der vorangehenden Ansprüche, **dadurch gekennzeichnet, dass**
das Elastomer (2, 3) eine hohe Quelldynamik aufweist, und insbesondere die maximale Quellung bereits nach weniger als 12 Stunden erreicht wird.

7. Formteil nach einem der vorangehenden Ansprüche, **dadurch gekennzeichnet, dass**
die Volumenzunahme (V2-V1) des Elastomers (2, 3) durch das Quellen im Bereich von 5 % bis 20 % des Volumens des Elastomers liegt.

8. Formteil nach einem der vorangehenden Ansprüche, **dadurch gekennzeichnet, dass**
die Dauer der Rückstellung des Volumens durch Beaufschlagung mit einem warmen Luftstrom, Unterdruck oder Erwärmung unter freier Konvektion reduziert werden kann, insbesondere auf unter 10 Minuten.

9. Formteil nach einem der vorangehenden Ansprüche, **dadurch gekennzeichnet, dass**
das Formteil (1) im Spritzguss-, Extrusions- oder Kalandrierverfahren oder in einem additiven Verfahren hergestellt ist.

10. Formteil nach einem der vorangehenden Ansprüche, **dadurch gekennzeichnet, dass**
das Elastomer (2, 3) eine hohe Dehnbarkeit von über 400 % und/oder eine hoher Temperaturbeständigkeit von über 120 Grad Celsius hat.
